# EUROPÄISCHE PATENTSCHRIFT

(11) **EP 2 997 195 B1**
(45) Veröffentlichungstag und Bekanntmachung des Hinweises auf die Patenterteilung: **14.08.2019**
(21) Anmeldenummer: 14721878.8
(22) Anmeldetag: 06.05.2014
(51) Int. Cl.: E01B 7/00, E01B 9/68

(54) **BEFESTIGUNGSPUNKT VON SCHIENEN FÜR SCHIENENFAHRZEUGE**
FASTENING POINT OF RAILS FOR RAIL VEHICLES
POINT DE FIXATION DE RAILS POUR VÉHICULES FERROVIAIRES

(30) Priorität: 13.05.2013 DE 102013104907
(43) Veröffentlichungstag der Anmeldung: 23.03.2016
(73) Patentinhaber: Vossloh-Werke GmbH, 58791 Werdohl (DE)
(72) Erfinder: HUNOLD, André, 58636 Iserlohn (DE); KRIEG, Nikolaj, 58135 Hagen (DE)
(74) Vertreter: Cohausz & Florack
(86) Internationale Anmeldenummer: PCT/EP2014/059244
(87) Internationale Veröffentlichungsnummer: WO 2014/184059

(56) Entgegenhaltungen:
- EP-A1- 2 369 057
- BE-A- 556 924
- DE-A1- 2 316 351
- DE-A1- 4 034 032
- DE-A1- 10 110 970
- DE-U1-202004 009 476
- US-A- 962 751
- US-A- 5 249 743

## Beschreibung

Die Erfindung betrifft einen Befestigungspunkt, in dem für Schienenfahrzeuge vorgesehene Schienen, die jeweils einen Schienenfuß, einen auf dem Schienenfuß stehenden Schienensteg und einen vom Schienensteg getragenen Schienenkopf aufweisen, befestigt sind. Dabei umfasst ein solcher Befestigungspunkt einen festen Untergrund, der beispielsweise durch eine aus einem Beton- oder einem anderen aushärtenden Gusswerkstoff hergestellte Schwelle oder Platte gebildet ist, und ein System der voranstehend angegebenen Art, dessen zwei Führungsplatten die jeweils zugeordnete zu befestigende Schiene an einer ihrer Längsseiten führen, und dessen zwei Unterlegplatten, auf denen jeweils eine der Führungsplatten sitzt, sich jeweils unter den Schienenfuß der zugeordneten Schiene erstrecken.

Es versteht sich von selbst, dass die in den erfindungsgemäßen Befestigungspunkten zu befestigenden Schienen in üblicher Weise jeweils einen Schienenfuß, einen auf dem Schienenfuß stehenden Schienensteg und einen vom Schienensteg getragenen Schienenkopf aufweisen.

Befestigungspunkte der hier in Rede stehenden Art weisen üblicherweise zusätzlich zu den voranstehend aufgezählten Bauteilen zwei Federelemente auf, von denen jeweils eins bei fertig montiertem Befestigungspunkt auf einer der Führungsplatten sitzt und mit einem freien Federarm eine Niederhaltekraft auf einen Schienenfuß der zu befestigenden Schiene ausübt. Um die bei fertig montiertem Befestigungspunkt auf den Führungsplatten sitzenden Federelemente gegen den Untergrund verspannen zu können, sind darüber hinaus bei Befestigungspunkten der in Rede stehenden Art in der Regel zwei Spannelemente vorgesehen. Um die Spannelemente in den jeweiligen Untergrund führen zu können, ist dabei sowohl in den Führungsplatten als auch in den Unterlegplatten jeweils eine Durchgangsöffnung zum Durchstecken jeweils eines der Spannelemente vorgesehen.

Die hier in Rede stehenden Unterlegplatten dienen einerseits dazu, die anderen Bauteile des jeweiligen Befestigungspunkts großflächig auf dem jeweiligen Untergrund abzustützen. Andererseits werden die Unterlegplatten zur Regulierung der Höhe genutzt, in der die Schiene in einem Schienenbefestigungspunkt über dem jeweiligen Untergrund gehalten wird. Auf diese Weise lassen sich Abweichungen des Höhenniveaus zwischen zwei benachbarten Befestigungspunkten ausgleichen, die über einen Toleranzbereich hinausgehen. Hierzu können unterschiedlich dicke oder zwei oder mehrere Unterlegplatten aufeinander gestapelt unter die jeweilige Schiene geschoben werden.

Ein Beispiel für einen Schienenbefestigungspunkt, bei dem eine Unterlegplatte zum Einsatz kommt, ist in der DE 101 10 970 A1 gezeigt. Die dort als konventionelle Rippenplatte ausgebildete Unterlegplatte erstreckt sich seitlich über die Breite der Schiene hinaus und trägt an ihrer Oberseite Rippen, zwischen denen die Schiene geführt ist. Um eine elastische Abstützung der Rippenunterlegplatte auf dem jeweiligen Untergrund zu ermöglichen, sitzt die Rippenunterlegplatte mit ihren seitlichen Längsrandabschnitten jeweils auf einer Elastomerplatte. Die Elastomerplatten stützen die Rippenplatte in horizontaler Richtung und in Schwerkraftrichtung elastisch ab. Bei einer anderen in der DE 101 10 970 A1 gezeigten Ausgestaltung fehlt eine Unterlegplatte. Stattdessen ist die Schiene mit den seitlichen Randabschnitten ihres Schienenfußes auf jeweils einer der Elastomerplatten abgestützt, wobei in den zwischen den Elastomerplatten vorhandenen Abstand unterhalb des Schienenfußes Zwischenplatten angeordnet sind, die eine definierte Nachgiebigkeit und Dämpfung bewirken sollen.

Ein wichtiges Einsatzgebiet von Unterlegplatten der hier in Rede stehenden Art ist die im Rahmen von Instandsetzungsarbeiten vorzunehmende nachträgliche Höhenregulierung von bereits montierten Schienenbefestigungspunkten. Hier besteht die Anforderung, dass sich die Unterlegplatten nachträglich hinzufügen bzw. austauschen lassen müssen, ohne dass dazu das komplette System vollständig demontiert werden muss.

Um dieser Anforderung zu genügen, ist in der EP 2 369 057 A1 ein Schienenbefestigungssystem der eingangs angegebenen Art vorgeschlagen worden, bei dem die Trennfuge, entlang der die Unterlegplatte des Systems in die beiden Unterlegplatten geteilt ist, als Stoßlinie ausgebildet ist, die von der einen der quer zur zu befestigenden Schiene ausgerichteten Längsseiten der Unterlegplatte ausgehend mit Abstand zu deren einen Schmalseite zu der Durchgangsöffnung geführt und von dort die Durchgangsöffnung schneidend in Richtung der Schmalseite der Unterlegplatte geführt ist.

Der Vorteil dieser Ausgestaltung einer Unterlegplatte besteht darin, dass trotz der Mehrteilung der Unterlegplatte eine vollflächige Abstützung der auf der Unterlegplatte bei fertig montiertem System stehenden Bauteile auch dann gesichert ist, wenn die Unterlegplatten nicht perfekt aneinander liegen. Insbesondere lassen sich mit der bei dem bekannten System eingesetzten Unterlegplatte in Querrichtung zur Schiene auftretende Toleranzen der Position der die Schiene seitlich abstützenden Führungsplatten ausgleichen.

Trotz dieser Möglichkeit, die von der jeweiligen Unterlegplatte überdeckte Breite des Schienenfußes im Rahmen bestimmter Toleranzen an die jeweiligen örtlichen Gegebenheiten anpassen zu können, ergeben sich in der Praxis Einbausituationen, bei denen auch mit den bekannten geteilten Unterlegplatten keine befriedigende Abstützung der jeweiligen Schiene oder der die Schiene führenden und haltenden Bauteile erreicht werden kann. Eine solche Situation ergibt sich beispielsweise im Bereich von Weichen, bei denen im Bereich der jeweiligen Verzweigung die Schienen so eng benachbart angeordnet sind, dass sich mit den konventionellen Unterlegplatten auch dann kein Höhenausgleich im jeweiligen Befestigungspunkt bewerkstelligen lässt, wenn die Unterlegplatten geteilt ausgeführt sind. Gerade in solchen so genannten "Sonderbefestigungspunkten" ergibt sich im Zuge von Instandsetzungsarbeiten jedoch ein erhöhter Bedarf an einfach zu montierenden und gleichzeitig preisgünstigen Einrichtungen zum Unterlegen der jeweiligen Schienen.

Vor dem Hintergrund des voranstehend erläuterten Standes der Technik bestand die Aufgabe der Erfindung darin, einen entsprechend ausgebildeten Befestigungspunkt anzugeben, der auch in komplex gestalteten Sonderbefestigungspunkten eine einfach handzuhabende und gleichzeitig sichere sowie kostengünstig herzustellende Unterstützung und Höhenregulierung der jeweils zu befestigenden Schiene an dem jeweiligen Untergrund erlauben.

Die voranstehend genannte Aufgabe ist erfindungsgemäß dadurch gelöst worden, dass ein solcher Befestigungspunkt die in Anspruch 1 angegebenen Merkmale besitzt.

Vorteilhafte Ausgestaltungen der verschiedenen in den Ansprüchen angegebenen Verkörperungen der Erfindung sind in den auf die jeweiligen unabhängigen Ansprüche rückbezogenen Ansprüchen angegeben und werden nachfolgend wie der allgemeine Erfindungsgedanke im Einzelnen erläutert.

Den verschiedenen Verkörperungen der Erfindung liegt der gemeinsame Erfindungsgedanke zu Grunde, dass in einem Befestigungspunkt zwei benachbart zueinander angeordnete Unterlegplatten vorhanden sind, die so ausgebildet sind, dass ihre einander zugeordneten Stirnseiten mit Abstand zueinander positioniert sind. Der zwischen den Unterlegplatten verbleibende Abstand ist dann durch eine Überbrückungsplatte gefüllt. Diese Gestaltung erlaubt es, für unterschiedliche Schienenabmessungen und Einbausituationen standardisierte, immer gleich geformte Unterlegplatten einzusetzen, die in großen Stückzahlen kostengünstig hergestellt werden können. Die den zwischen den Unterlegplatten gegebenenfalls verbleibenden Abstand überbrückende Überbrückungsplatte kann aus einfachem Plattenmaterial hergestellt sein und in einer einfachen Bearbeitungsoperation so zugeschnitten werden, dass ihre Form optimal an die Form des durch den Abstand bedingt zwischen den einander zugeordneten Stirnseiten der Unterlegplatten jeweils verbleibenden Raums angepasst ist. Bei in diesen Raum eingelegter Überbrückungsplatte sind die einander zugeordneten Unterlegplatten dann formschlüssig gegeneinander abgestützt. Auf diese Weise ist durch die Anwesenheit der Überbrückungsplatte einerseits eine großflächige Abstützung der jeweiligen Schiene auch dann gesichert, wenn die Unterlegplatte aufgrund ihrer standardisierten, nicht an erster Stelle an die jeweilige Form und Lage der Schiene angepasste Formgebung mit ihrem jeweiligen Unterlegabschnitt den Schienenfuß auf seiner Unterseite nur teilweise überdeckt. Anderseits stellt die erfindungsgemäße Anordnung einer Überbrückungsplatte zwischen zwei Unterlegplatten sicher, dass die zueinander benachbart angeordneten Unterlegplatten und die Überbrückungsplatte sich gegeneinander abstützen und so sicher ortsfest gehalten sind.

Ein diesem Grundgedanken folgendes System zum Befestigen von für Schienenfahrzeuge vorgesehenen Schienen auf einem festen Untergrund umfasst demgemäß zwei Führungsplatten, die im fertig montierten Zustand die jeweils zugeordnete zu befestigende Schiene an einer ihrer Längsseiten führen, sowie zwei Unterlegplatten, auf denen bei fertig montiertem System jeweils eine der Führungsplatten sitzt und die sich im fertig montierten Zustand jeweils unter den Schienenfuß der zugeordneten Schiene erstrecken. Des Weiteren gehört zu einem solchen System eine Überbrückungsplatte, die dazu vorgesehen ist, bei fertig montiertem System zwischen den einander zugeordneten Stirnseiten von zwei im fertig montierten Zustand benachbart zueinander positionierten Unterlegplatten angeordnet zu sein, um den einen dort zwischen den Unterlegplatten vorhandenen Abstand zu überbrücken.

Dem entsprechend umfasst ein erfindungsgemäßer Befestigungspunkt, in dem für Schienenfahrzeuge vorgesehene Schienen befestigt sind, einen festen Untergrund, zwei Führungsplatten, die die jeweils zugeordnete zu befestigende Schiene an einer ihrer Längsseiten führen, und zwei Unterlegplatten, auf der bei im fertig montierten Zustand jeweils eine der Führungsplatten sitzt, wobei sich die Unterlegplatten jeweils unter den Schienenfuß der zugeordneten Schiene erstrecken. Bei einem solchen Befestigungspunkt ist erfindungsgemäß zwischen den Unterlegplatten eine Überbrückungsplatte angeordnet, die einen Abstand füllt, der zwischen den einander zugeordneten Stirnseiten von zwei benachbart zueinander angeordneten Unterlegplatten vorhanden ist.

Demselben Gedanken folgend umfasst eine Einrichtung zum Unterlegen von Schienen für Schienenfahrzeuge zwei Unterlegplatten und eine Überbrückungsplatte. Die Unterlegplatten haben dabei jeweils einen Unterlegabschnitt, der dazu vorgesehen ist, bei fertig montierter Einrichtung unter dem Schienenfuß der zugeordneten Schiene zu liegen, und einen Stützabschnitt, der im fertig montierten Zustand seitlich über den Schienenfuß der zugeordneten Schiene hinaus steht. Bei mindestens einer der Unterlegplatten ist allerdings die Länge des Unterlegabschnitts auf einen Teil der Breite des zugeordneten Schienenfußes beschränkt, so dass der betreffende Unterlegabschnitt bei Gebrauch die Breite der Unterseite des ihm zugeordneten Schienenfußes nur teilweise abdeckt. Die Überbrückungsplatte ist dabei dazu vorgesehen, bei fertig montierter Einrichtung zwischen den einander zugeordneten Stirnseiten der Unterlegplatten angeordnet zu sein, um einen dort zwischen den einander zugeordneten Stirnseiten der Unterlegplatten vorhandenen Abstand zu überbrücken.

Grundsätzlich ist es denkbar, die Unterlegplatten so auszubilden, dass sie unter Verzicht auf die erfindungsgemäß vorgesehene Überbrückungsplatte nach Art von Unterlegplatten zu einer Stützplatte zusammengesetzt werden können, auf der einerseits die zu befestigende Schiene mit ihrem Schienenfuß und anderseits die zum seitlichen Führen der Schiene benötigten Führungsplatten sitzen können. Die beiden Unterlegplatten einer solcherart ausgebildeten Stützplatte sind dann durch eine Trennfuge voneinander getrennt, entlang der sie quer und längs zur befestigenden Schiene verschoben werden können, um Maß- und Lagetoleranzen auszugleichen. Wird dabei der Abstand der Unterlegplatten voneinander zu groß, wird dieser Abstand in erfindungsgemäßer Weise durch eine Überbrückungsplatte gefüllt, um eine ordnungsgemäße Abstützung der Schiene auch im betreffenden Bereich zu gewährleisten.

Von besonderem Wert erweist sich die Erfindung bei der Befestigung von Schienen in Situationen, in denen Schienen so eng benachbart oder winklig zueinander angeordnet sind, dass zwischen ihnen jeweils nur eine Unterlegplatte und eine darauf montierte Führungsplatte angeordnet werden kann. In einem solchen Sonderbefestigungspunkt erlaubt es die Erfindung, die der einen Schiene zugeordnete Unterlegplatte an der im selben Befestigungspunkt der anderen Schiene zugeordneten Unterlegplatte mittels der Überbrückungsplatte abzustützen. Lediglich die Überbrückungsplatte muss dabei so zugeschnitten sein, dass sie den zwischen den einander zugeordneten Stirnseiten der Unterlegplatten verbleibenden Abstandsraum füllt. Auch in einem Sonderbefestigungspunkt ist es daher durch die Erfindung möglich, standardmäßig geformte, für beliebige Befestigungspunkte geeignete Unterlegplatten einzusetzen, ohne dass deren Form in besonderer Weise an die jeweilige Befestigungssituation angepasst sein muss. Dies gilt selbstverständlich sowohl für Befestigungspunkte, bei denen die Unterlegplatten in einer Linie angeordnet sind, so dass die einander zugeordneten Stirnseiten der Unterlegplatten parallel ausgerichtet sind, als auch für solche Befestigungspunkte, bei denen die Unterlegplatten winklig zueinander ausgerichtet sind, bei denen also die einander zugeordneten Stirnseiten einen Winkel einschließen.

In die Unterlegplatten kann jeweils eine von der Oberzur Unterseite der jeweiligen Unterlegplatte führende Durchgangsöffnung zum Durchführen eines Spannelements vorgesehen sein, das zum Verspannen eines Federelements benötigt wird, das im Gebrauch auf der jeweiligen auf der Unterlegplatte sitzenden Führungsplatte abgestützt ist. Dabei kann die betreffende Durchgangsöffnung zu einer der Längsseiten der jeweiligen Unterlegplatte schlitzartig geöffnet sein. In Folge der seitlichen schlitzartigen Öffnung der Durchgangsöffnungen lässt sich die jeweilige Unterlegplatte aus seitlicher Richtung so unter einen bestehenden und in der erforderlichen Weise gelockerten, jedoch nicht vollständig gelösten Befestigungspunkt schieben, dass die seitliche Öffnung mit ihren sie begrenzenden Wänden das jeweils in den Untergrund greifende Spannelement seitlich umgreift. Auf diese Weise ist die jeweilige Unterlegplatte während des Einschiebens an dem Spannelement geführt und findet selbsttätig ihren zum Abstützen der vom betreffenden Spannelement gehaltenen Führungsplatte optimalen Platz, ohne dass es dazu umständlicher Ausrichtarbeiten bedarf.

Die durch die schlitzförmige seitliche Öffnung der Durchgangsöffnung bereitgestellte Führung kann dadurch besonders präzisiert werden, dass die die zu der jeweiligen Längsseite führende seitliche Öffnung der Durchgangsöffnungen begrenzenden Wandflächen parallel zur Schmalseite der Unterlegplatte ausgerichtet sind. Alternativ oder ergänzend kann es jedoch auch zweckmäßig sein, die seitliche Öffnung insbesondere in ihrem der jeweiligen Längsseite der Unterlegplatte zugeordneten Öffnungsbereich trichterförmig auszubilden, um das Einführen des jeweils zugeordneten Spannelements zu vereinfachen.

Unabhängig von der Form der Führungsplatten, eignet sich die Erfindung grundsätzlich für alle Systeme, bei denen Führungsplatten auf einem festen Untergrund abgestützt werden sollen. So können beispielsweise die Führungsplatten auf einer ebenen, an der ihnen zugeordneten Oberseite der jeweiligen Unterlegplatte vorgesehenen Aufstandfläche stehen. Dabei können die Unterlegplatten ohne Weiteres so ausgelegt sein, dass sie mit an dem Untergrund vorgesehenen Formelementen, wie Abstützungen, Rillen, anderen Einsenkungen oder Erhebungen, wie Schultern, formschlüssig zusammenwirken, um die Position der Unterlegplatte relativ zum Untergrund auch unter hoher Lasteinwirkung zu sichern.

Eine für die Praxis besonders wichtige Ausgestaltung eines Systems und eines entsprechend erfindungsgemäß ausgebildeten Befestigungspunktes besteht in dieser Hinsicht darin, dass die Führungsplatten als Winkelführungsplatten ausgebildet sind, die an ihrer dem Untergrund zugeordneten Unterseite jeweils einen von der Unterseite abstehenden Führungsabschnitt aufweisen, dass in der jeweils zugeordneten Unterlegplatte eine Rille ausgebildet ist, in der der Führungsabschnitt der jeweils zugeordneten Führungsplatte bei fertig montiertem System oder Befestigungspunkt formschlüssig sitzt, und dass korrespondierend zum Führungsabschnitt der jeweils zugeordneten Führungsplatte an der Unterseite der jeweiligen Unterlegplatte ebenfalls ein Führungsabsatz ausgebildet ist, der bei fertig montiertem System oder Befestigungspunkt formschlüssig in einer zugeordneten Einsenkung des Untergrunds sitzt.

Zu ihrer allgemeinen Verwendbarkeit auch im Bereich konventioneller Befestigungspunkte trägt bei, wenn die Unterlegplatten in Draufsicht gesehen eine rechteckige Grundform besitzen. Dabei kann ihr im Gebrauch unter dem Schienenfuß angeordneter Unterlegabschnitt gegenüber ihrem Stützabschnitt, auf dem im Gebrauch die jeweils zugeordnete Führungsplatte abgestützt ist, verbreitert sein. Auf diese Weise ist bei optimaler Abstützung der Schiene und der Führungsplatte das Gewicht der Unterlegplatte minimiert.

Die für die erfindungsgemäßen Zwecke vorgesehenen Unterlegplatten können genauso wie die Überbrückungsplatten in an sich bekannter Weise aus einem Kunststoffmaterial hergestellt sein.

Um die ordnungsgemäße Positionierung der Unterlegplatten in Bezug zu einander oder in Bezug auf die zwischen ihnen angeordnete Überbrückungsplatte zu unterstützen, können die Unterlegplatten oder die Überbrückungsplatte an ihren einander jeweils zugeordneten Stirnseiten ein Formelement aufweisen, das formschlüssig mit einem an der jeweils anderen Unterlegplatte oder Überbrückungsplatte vorgesehenen und korrespondierend geformten Formelement zusammenwirkt. Bei dem betreffenden Formelement kann es sich beispielsweise um einen angrenzend an den einen Längsrand der jeweiligen Unterleg- oder Überbrückungsplatte angeformten und in Richtung der jeweils anderen Unterleg- bzw. zur Überbrückungsplatte vorstehenden Vorsprung handeln, bei dem die jeweils andere Platte im Gebrauch anliegt.

Nachfolgend wird die Erfindung anhand von Ausführungsbeispielen näher erläutert. Es zeigen jeweils schematisch:
- Fig. 1: eine Einrichtung zum Unterlegen einer Schiene für ein Schienenfahrzeug in Draufsicht;
- Fig. 2: die Einrichtung gemäß Fig. 1 in seitlicher Ansicht;
- Fig. 3: einen Befestigungspunkt für zwei Schienen einer Weiche in einem Schnitt quer zur Längserstreckung der Schiene;
- Fig. 4: den Befestigungspunkt gemäß Fig. 3 in Draufsicht;
- Fig. 5: eine Unterlegplatte in Draufsicht;
- Fig. 6: die Unterlegplatte gemäß Fig. 6 in seitlicher Ansicht.

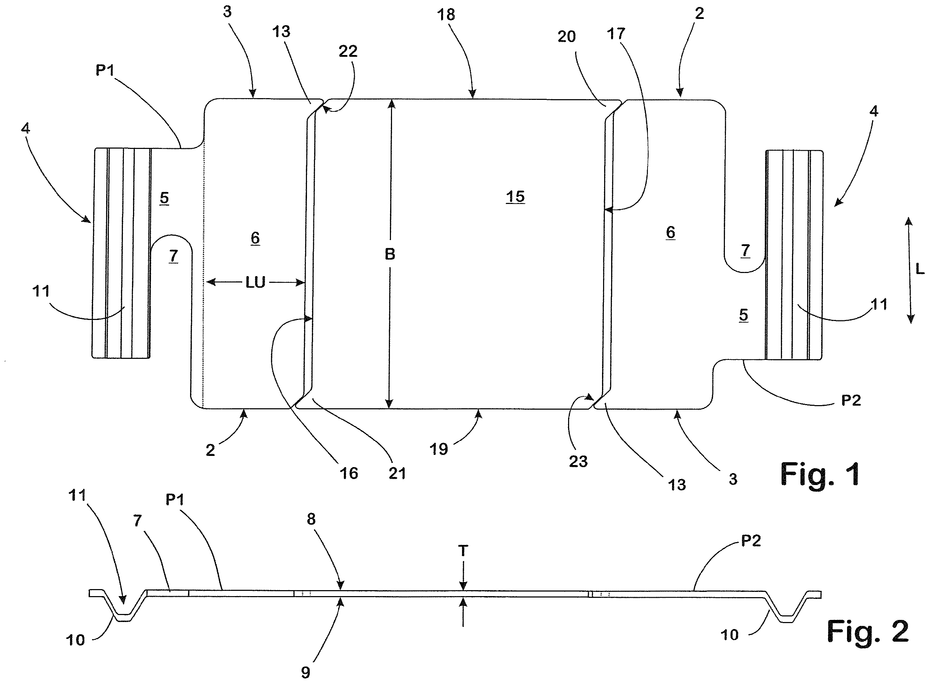

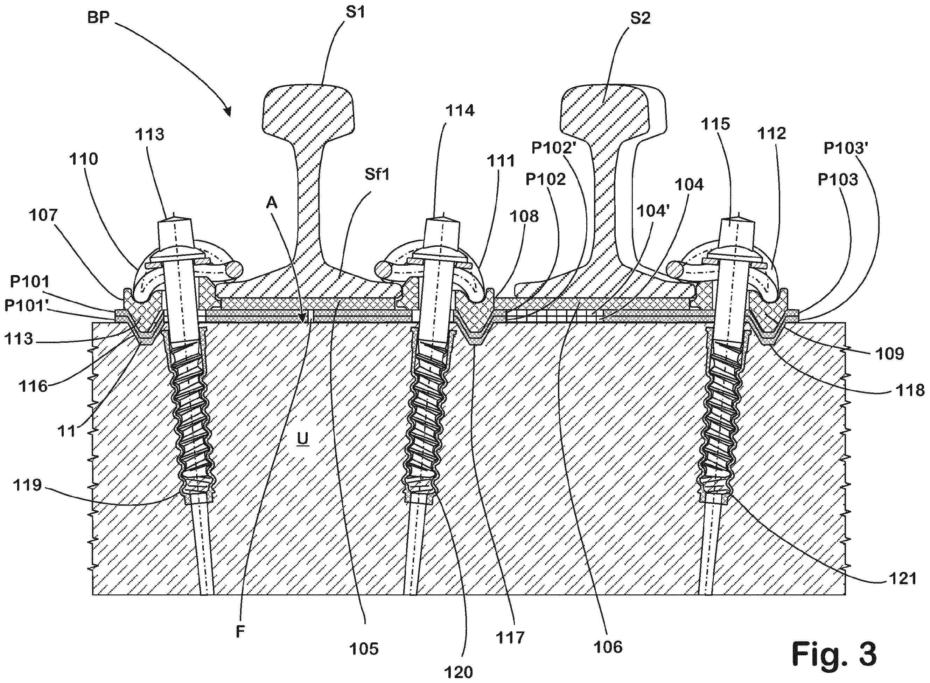

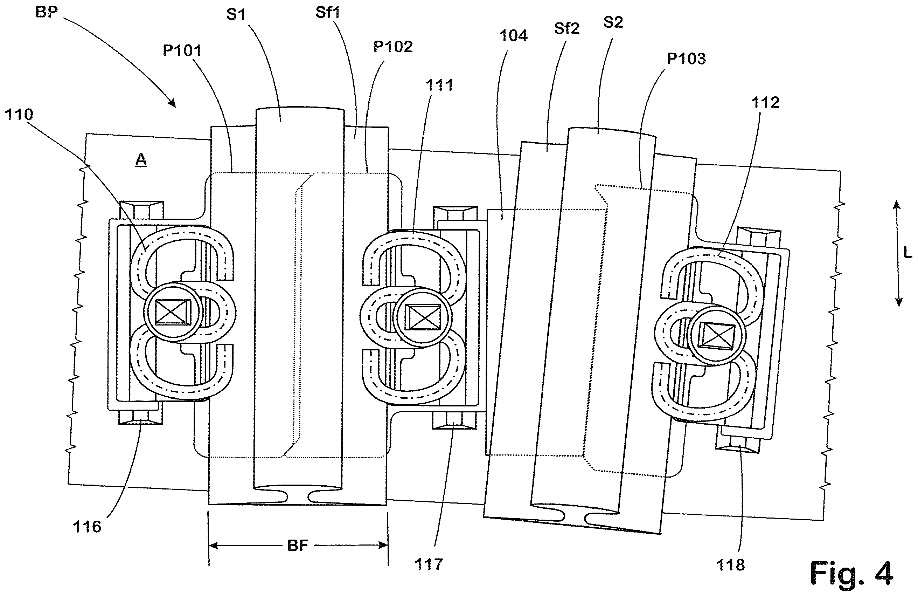

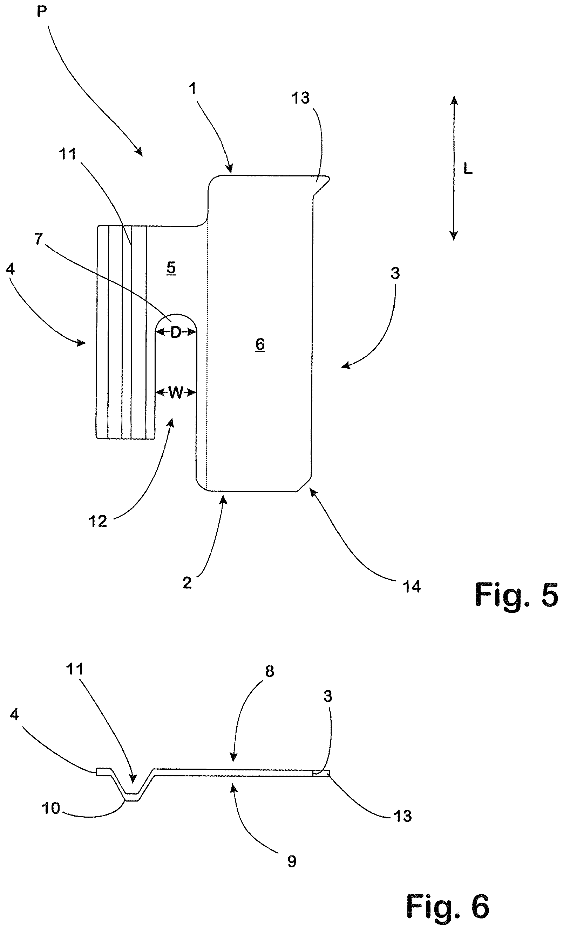

Die in Fig. 5 und 6 als Einzelbauteil dargestellte Unterlegplatte P steht exemplarisch für die bei der in den Figuren 1 und 2 gezeigte Einrichtung und bei dem in den Figuren 3 und 4 gezeigten Befestigungspunkt BP jeweils vorgesehenen Unterlegplatten P1,P2 und P101,P102,P103, P101',P102',P103'. Deren Form und Abmessungen stimmen jeweils identisch überein mit der Unterlegplatte P.

Die Unterlegplatte P weist jeweils eine rechteckige Grundform mit einer ersten quer zur Längsrichtung L der zu befestigenden Schiene ausgerichteten Längsseite 1, einer gegenüberliegend dazu angeordneten Längsseite 2 und zwei gegenüberliegend zueinander angeordneten Stirnseiten 3,4 auf. Dabei ist die Unterlegplatte P in einen Stützabschnitt 5 und einen Unterlegabschnitt 6 unterteilt.

Der Unterlegabschnitt 6 ist in Längsrichtung L der zu befestigenden Schiene verbreitert, um einen vergrößerten Abstützbereich für den Fuß der Schiene zur Verfügung zu stellen.

In einem geringen Abstand zum Unterlegabschnitt 6 ist in die Unterlegplatte P jeweils eine Durchgangsöffnung 7 eingeformt, die von der der Schiene zugeordneten Oberseite 8 zur dem jeweiligen Untergrund U zugeordneten Unterseite 9 der Unterlegplatte P führt.

In den jeweils zwischen der Durchgangsöffnung 7 und der zugeordneten, vom Unterlegabschnitt 6 abgewandten Stirnseite 4 vorhandenen Randbereich des Stützabschnitts 5 ist ein parallel zur Stirnseite 4 verlaufender Führungsabsatz 10 an der Unterlegplatte P ausgebildet, der von der Unterseite 9 der Unterlegplatte P vorsteht und einen V-förmigen Querschnitt mit spitz in Richtung seines freien Endes aufeinander zulaufenden Seitenflächen besitzt. Von der Oberseite 8 her ist in den Führungsabsatz 10 eine Rille 11 in die Unterlegplatte P eingeformt. Die Rille 11 weist ebenfalls einen V-förmigen Querschnitt auf.

Die Durchgangsöffnung 7 der Unterlegplatte P ist durch eine schlitzartig ausgebildete Öffnung 12 seitlich zur einen Längsseite 2 der Unterlegplatte P geöffnet. Die die seitliche Öffnung 12 begrenzenden Wandflächen verlaufen dabei jeweils parallel zu den Stirnseiten 3,4 der Unterlegplatte P in einem Abstand, der dem Durchmesser D der Durchgangsöffnung 7 entspricht. Die lichte Weite W der seitlichen Öffnung 12 ist dementsprechend gleich dem Durchmesser D der Durchgangsöffnung 7.

Angrenzend an diejenige Längsseite 2, die der Längsseite 1 gegenüberliegt, ist an der die seitliche Öffnung 12 der den Unterlegabschnitt 6 begrenzenden Stirnseite 3 der Unterlegplatte P ein Vorsprung 13 angeformt, der von der Unterlegplatte P absteht. Mit ihrem der zugeordneten Längsseite 2 zugeordneten Rand bildet der Vorsprung 13 eine geradlinige Verlängerung des betreffenden Rands, während sein zur Stirnseite 3 gehörender Rand in Richtung der anderen Stirnseite und der anderen Längsseite 2 abgeschrägt ist, so dass der Vorsprung 13 in Draufsicht keilförmig ausgebildet ist.

Der Eckbereich 14 zwischen der Stirnseite 3 und der zum Vorsprung 13 beabstandeten Längsseite 2 der Unterlegplatte ist jeweils in entsprechender Weise so abgeschrägt, dass der Rand der Unterlegplatte P in diesem Eckbereich 14 parallel zum abgeschrägten Rand des Vorsprungs 13 ausgerichtet ist.

Die in den Figuren 1 und 2 gezeigte Einrichtung umfasst zwei in der voranstehend am Beispiel der Unterlegplatte P beschriebenen Weise ausgebildete Unterlegplatten P1,P2 und eine Überbrückungsplatte 15, die zwischen den Unterlegplatten P1,P2 angeordnet ist. Die Unterlegplatten P1,P2 sind dabei punktsymmetrisch zueinander ausgerichtet, so dass die Stirnseiten 3 ihrer Unterlegabschnitte 6 einander und jeweils einer zugeordneten stirnseitigen Anlagefläche 16,17 zugewandt sind. Die stirnseitigen Anlageflächen 16,17 der in Draufsicht rechteckigen Überbrückungsplatte 15 erstrecken sich zwischen den Längsseiten 18,19 der Überbrückungsplatte 15. Dabei ist die Breite B der Überbrückungsplatte 15 gleich der Breite und die Dicke T der Überbrückungsplatte 15 gleich der Dicke der Unterlegabschnitte 6 der Unterlegplatten P1,P2. Dementsprechend ist die eine Längsseite 18 der Überbrückungsplatte 15 fluchtend zur Längsseite 2 der Unterlegplatte P1 und zur Längsseite 1 der Unterlegplatte P2, die Längsseite 19 der Überbrückungsplatte 15 fluchtend zur Längsseite 2 der Unterlegplatte P1 und zur Längsseite 2 der Unterlegplatte P2, die Oberseite der Überbrückungsplatte 15 fluchtend zur Oberseite 8 der Unterlegplatten P1,P2 und die Unterseite der Überbrückungsplatte 15 fluchtend zur Unterseite 9 der Unterlegplatten P1,P2 ausgerichtet.

Im Bereich der Ecke zwischen der einen Längsseite 18 und der der Unterlegplatte P2 zugeordneten Stirnseite 4 sowie im Bereich der diagonal gegenüberliegenden Ecke zwischen der anderen Längsseite 19 und der der Unterlegplatte zuordneten stirnseitigen Anlagefläche 16 ist an der Überbrückungsplatte 15 jeweils ein Vorsprung 20,21 ausgebildet, dessen Form und Anordnung gleich der Form und Anordnung des Vorsprungs 13 der Unterlegplatte P1,P2 ist. In entsprechender Weise sind die beiden anderen Eckbereiche 22,23 der Überbrückungsplatte 15 wie der jeweilige Eckbereich 14 der Unterlegplatten P1,P2 angeschrägt. Bei im fertig montierten Zustand entsprechender Anordnung (Fig. 1, Fig. 2) liegen dementsprechend die Vorsprünge 13 der Unterlegplatten P1,P2 mit ihren schrägverlaufenden Rändern formschlüssig am ihnen jeweils zugeordneten abgeschrägten Eckbereich 22,23 der Überbrückungsplatte 15 an. Genauso liegen die Vorsprünge 20,21 mit ihren schräg verlaufenden Rändern formschlüssig am jeweils zugeordneten Eckbereich 14 der Unterlegplatten P1,P2 an. Auf diese Weise ist bei fertig montierter Einrichtung die relative Position der Unterlegplatten P1,P2 und der Überbrückungsplatte zueinander in Längsrichtung L über die Vorsprünge 13,20,21 festgelegt.

Die in den Figuren 1 und 2 dargestellte, im fertig montierten Zustand eine rechtwinklige Grundform aufweisende Einrichtung kann beispielsweise eingesetzt werden, um in nicht erfindungsgemäßer Weise zwei hier nicht dargestellte eng benachbart angeordnete und parallel ausgerichtete Schienen abzustützen, die mit ihrem Schienenfuß beide nebeneinander auf der durch die Unterlegabschnitte 6 der Unterlegplatten P1,P2 und die Überbrückungsplatte 15 gebildeten Unterlage bilden. Die Unterlegabschnitte 6 der Unterlegplatten P1,P2 sind dabei parallel zueinander ausgerichtet.

Anhand der Figuren 3 und 4 wird nun ein Befestigungspunkt BP für eine Weiche beschrieben, bei dem jeweils zwei aufeinander gestapelte, der Unterlegplatte P entsprechende Unterlegplatten P101,P101' parallel zu zwei ebenfalls aufeinander gestapelten unter der Unterlegplatte P entsprechende Unterlegplatten P102,P102' angeordnet sind, während ein weiterer Stapel von zwei ebenfalls der Unterlegplatte P entsprechenden Unterlegplatte P103,P103' winklig zu den zu ihr benachbart angeordneten Unterlegplatten P102,P102' angeordnet sind.

Der Befestigungspunkt BP fällt dabei in die Kategorie der so genannten "Sonderbefestigungspunkte", da er individuell an die in der jeweiligen Weiche gegebene Befestigungssituation angepasst ist.

Im Befestigungspunkt BP sind zwei Schienen S1,S2 eng benachbart zueinander ausgerichtet, die in Draufsicht (Fig. 4) betrachtet zwischen sich einen spitzen Winkel einschließen. Der Befestigungspunkt BP ist dabei auf einem beispielsweise durch eine Betonschwelle oder einer Betonplatte gebildeten festen Untergrund U gebildet. Er umfasst neben den Unterlegplatten P101 - P103' zwei Überbrückungsplatten 104,104', zwei Höhenregulierplatten 105,106, drei Führungsplatten 107,108,109, drei als konventionelle ω-förmige Spannklemmen ausgebildete Federelemente 110,111,112 sowie drei als Spannschrauben ausgebildete Spannelemente 113,114,115, die über jeweils eine Unterlegscheibe auf die Mittelschlaufe des jeweils zugeordneten Federelements 110,111,112 wirken.

Bei den Führungsplatten 107,108,109 handelt es sich um konventionelle "Winkelführungsplatten", die an ihrer dem Untergrund U zugeordneten Unterseite einen im Querschnitt V-förmigen und sich in Montagestellung in Längsrichtung L erstreckenden Absatz sowie eine Durchgangsöffnung zum Durchführen jeweils eines der Spannelemente 113,114,115 aufweist. An der Oberseite der Führungsplatten 107,108,109 sind darüber hinaus in ebenfalls an sich bekannter Weise Formelemente ausgebildet, an denen das jeweils zugeordnete Federelement 110,111,112 geführt und abgestützt ist.

Die jeweils zuunterst angeordneten Unterlegplatten P101',P102',P103' sowie die untere Überbrückungsplatte 104' sitzen jeweils auf einer an den festen Untergrund U ausgebildeten ebenen Aufstandfläche A, in die drei rillenförmige Einsenkungen 116,117,118 eingeformt sind. Die eine Einsenkung 116 ist dabei auf der von der Schiene S2 abgewandten Seite der Schiene S1 angeordnet, während die zweite Einsenkung 117 zwischen den Schienen S1 und S2 ausgebildet ist. Die dritte Einsenkung 118 ist dagegen auf der von der Schiene S1 abgewandten Seite der Schiene S2 in den Untergrund U eingeformt. Sie ist parallel zur zugeordneten Schiene S2 angeordnet, während die Einsenkungen 116 und 117 parallel zur ersten Schiene S1 ausgerichtet sind. Dementsprechend schneiden sich die gedachten Verlängerungen der Einsenkung 117 und 118 unter demselben Winkel wie die Schienen S1,S2.

Die Form der Einsenkungen 116-118 ist so an die Form des Führungsabsatzes 10 der zugeordneten Unterlegplatten P101'-P103' angepasst, dass der jeweilige Führungsabsatz 10 bei auf der Aufstandfläche A sitzenden Unterlegplatten P101'-P103' formschlüssig in der jeweiligen Einsenkung 116-118 sitzt. Dementsprechend sind auch die auf die unteren Unterlegplatten P101'-P103' gestapelten und mit ihren Führungsabsätzen 10 in die zugeordneten Rillen 11 der Unterlegplatten P101'-P103' greifenden Unterlegplatten P101-P103 formschlüssig gegenüber dem Untergrund U fixiert.

Gleichzeitig ist die Position der Einsenkungen 116-118 so an den Abstand des Führungsabsatzes 10 vom Unterlegabschnitt 6 der jeweiligen Unterlegplatte P101-P103' angepasst, dass bei auf der Aufstandfläche A sitzender und in die jeweils zugeordnete Einsenkung 116-118 sitzenden Unterlegplatten P101-P103' die Unterlegabschnitte 6 der Unterlegplatten P101-P103' in dem Bereich angeordnet sind, der vom Schienenfuß Sfl,Sf2 der jeweils zu befestigenden Schiene S1,S2 überdeckt wird. Die Länge LU der Unterlegabschnitte 6 der Unterlegplatten P,P1,P2,P101-P103' entspricht dabei jeweils höchstens der Hälfte der Breite BF des Schienenfußes Sfl,Sf2 der identisch geformten Schienen S1,S2. Bei der Schiene S1 decken die aneinander stoßenden Unterlegabschnitte 6 der Unterlegplatten P101,P101' und P102,P102' somit die Breite BF im Wesentlichen vollständig so ab, dass allenfalls noch eine schmale nicht gefüllte Trennfuge F zwischen ihnen verbleibt, über die Lagetoleranzen zwischen den Unterlegplatten P101,P101' und P102,P102' ausgeglichen werden.

Bei der Schiene S2 dagegen überdeckt der Unterlegabschnitt 6 der Unterlegplatten P103,P103' dagegen lediglich etwa die Hälfte der Breite BF des Schienenfußes SF2. Um den dadurch zwischen den aufeinander gestapelten Unterlegplatten P103,P103' und den benachbart angeordneten, ebenfalls aufeinander gestapelten Unterlegplatten P102,P102' vorhandenen Abstand zu füllen, sind die Überbrückungsplatten 104,104' vorgesehen.

Die Überbrückungsplatten 104,104' weisen in Draufsicht gesehen jeweils eine in Montagestellung an der Stirnseite 4 der Unterlegplatten P102,P102' anliegende erste Stirnseite auf, die parallel zur Stirnseite 4 der Unterlegplatten P102,P102' ausgerichtet ist. Ihre den Unterlegplatten P103,P103' zugeordnete Stirnseite verläuft dagegen parallel zu der Stirnseite 3 des Unterlegabschnitts 6 der Unterlegplatten P103,P103', so dass sich die gedachten Verlängerungen der Stirnseiten der Überbrückungsplatten 104,104' unter demselben spitzen Winkel treffen wie die Schienen S1,S2. Gleichzeitig ist der Abstand der Stirnseiten der Überbrückungsplatten 104,104' so gewählt, dass die Stirnseiten jeweils bündig an den jeweils zugeordneten Stirnseiten 4 der Unterlegplatten P102,P102' beziehungsweise den Stirnseiten 3 der Unterlegplatten P103,P103' anliegen. Dazu erstrecken sich die Längsseiten der Überbrückungsplatten parallel zueinander und bezogen auf die den Unterlegplatten P102,P102' zugeordneten Stirnseiten unter einem rechten Winkel ausgerichtet so weit, bis sie die den Unterlegplatten P103,P103' zugeordneten Stirnseiten der jeweiligen Überbrückungsplatte 104,104' schneiden.

In die Aufstandfläche A ist benachbart zu den Einsenkungen 116-118 jeweils ein Kunststoffdübel 119,120,121 in den Untergrund U eingelassen. In die Kunststoffdübel 119-121 wird bei der Montage des Befestigungspunktes BP jeweils eines der Spannelemente 113,115 zum Spannen des jeweils auf den Führungsplatten 107-109 sitzenden Federelements 110-112 eingeschraubt. Die als konventionelle Winkelführungsplatten ausgebildeten Führungsplatten 107-109 sitzen dabei auf der Oberseite der jeweiligen oberen Unterlegplatte P101-P103 und greifen mit ihren Winkelabsätzen in die Rille 11 der jeweils zugeordneten Unterlegplatte P101-P103.

Im von den Führungsplatten 107-109 jeweils seitlich begrenzten Bereich liegt jeweils eine der zusätzlichen Höhenregulierungsplatten 105,106, wobei auch die Form und Abmessung dieser Höhenregulierungsplatten 105,106 so an die Form des jeweiligen Bereichs angepasst ist, dass sie den betreffenden Bereich vollständig füllen.

Weitere Unterlegplatten P und Überbrückungsplatten können nach Bedarf bei ausreichend gelockerten Spannelementen 113-115 unter die Führungsplatten 107-109 und die Schienen S1,S2 geschoben werden. Hierzu können die Unterlegplatten P bei entsprechender Ausrichtung in Längsrichtung L der jeweiligen Schiene S1,S2 in den gegebenenfalls vorhandenen Freiraum geschoben werden. Im Zuge des Einschiebens fädelt ihre seitliche schlitzförmige Öffnung 12 in das jeweils zugeordnete Spannelement 113,114,115 ein, so dass die jeweilige Unterlegplatte P schon während des Einschiebens an dem jeweiligen Spannelement 113,114,115 so geführt ist, dass sie selbsttätig ihre optimale Position findet. Diese selbsttätige Positionierung wird dadurch unterstützt, dass der Absatz der jeweiligen Führungsplatte 107-109 in die zugeordnete Rille 11 der jeweiligen Unterlegplatte P und der Führungsabsatz 10 der Unterlegplatte P in die zugeordnete Rille 11 der darunter liegenden Unterlegplatte P101-P103 oder in die jeweilige in den Untergrund U eingeformte Einsenkung 116-118 greift. Bevor die zusätzliche Unterlegplatte P103 endgültig positioniert wird, wird auch eine weitere Überbrückungsplatte in den Abstandsbereich geschoben, um eine sichere Abstützung der Schiene S2 und eine ebenso sichere Positionierung der zusätzlichen Unterlegplatte P103 zu gewährleisten.

Die Führungsplatten P,P1,P2,P101-P103' sind jeweils in an sich bekannter Weise aus einem Kunststoff hergestellt, der erforderlichenfalls faserverstärkt ist, um die notwendige Festigkeit zu gewährleisten.

### BEZUGSZEICHEN

- 1,2: Längsseiten der Unterlegplatte P
- 3,4: Stirnseiten der Unterlegplatte P
- 5: Stützabschnitt der Unterlegplatte P
- 6: Unterlegabschnitt der Unterlegplatte P
- 7: Durchgangsöffnung der Unterlegplatte P
- 8: Oberseite der Unterlegplatte P
- 9: Unterseite der Unterlegplatte P
- 10: Führungsabsatz der Unterlegplatte P
- 11: Rille der Unterlegplatte P
- 12: seitliche Öffnung der Unterlegplatte P
- 13: Vorsprung der Unterlegplatte P
- 14: Eckbereich der Unterlegplatte P
- 15: Überbrückungsplatte
- 16,17: stirnseitige Anlageflächen der Überbrückungsplatte 15
- 18,19: Längsseiten der Überbrückungsplatte 15
- 20,21: Vorsprünge der Überbrückungsplatte 15
- 22,23: Eckbereiche der Überbrückungsplatte 15
- 104,104': Überbrückungsplatten
- 105,106: Höhenregulierplatten
- 107,108,109: Führungsplatten
- 110,111,112: Federelemente
- 113,114,115: Spannelemente
- 116,117,118: Einsenkungen
- 119,120,121: Kunststoffdübel

- A: Aufstandfläche
- B: Breite der Überbrückungsplatte 15
- BF: Breite des Schienenfußes Sf1,Sf2
- BP: Befestigungspunkt für eine Weiche
- D: Durchmesser der Durchgangsöffnung 7
- F: Trennfuge
- L: Längsrichtung der zu befestigenden Schiene
- LU: Länge der Unterlegabschnitte 6 der Unterlegplatten P,P1,P2,P101-P103'
- P: Unterlegplatte
- P1,P2,P101-P103': Unterlegplatten
- S1,S2: Schienen
- Sf1,Sf2: Schienenfuß
- T: Dicke der Überbrückungsplatte 15
- U: fester Untergrund
- W: Weite der seitlichen Öffnung 12

## Patentansprüche

1. Befestigungspunkt, in dem für Schienenfahrzeuge vorgesehene Schienen (S1,S2), die jeweils einen Schienenfuß (Sfl,Sf2), einen auf dem Schienenfuß (Sfl,Sf2) stehenden Schienensteg und einen vom Schienensteg getragenen Schienenkopf aufweisen, befestigt sind, umfassend:
- einen festen Untergrund (U),
- zwei Führungsplatten (107,108,109), die die jeweils zugeordnete zu befestigende Schiene (S1,S2) an einer ihrer Längsseiten führen,
und
- zwei Unterlegplatten (P1,P2,P101-P103'), auf denen jeweils eine der Führungsplatten (107,108,109) sitzt, wobei sich die Unterlegplatten (P1,P2,P101-P103') jeweils unter den Schienenfuß (Sf1,Sf2) der zugeordneten Schiene (S1,S2) erstrecken,
wobei
zwischen den Unterlegplatten (P1,P2,P101-P103') eine Überbrückungsplatte (104,104') angeordnet ist, die einen Abstand füllt, der zwischen den einander zugeordneten Stirnseiten (3,4) von zwei benachbart zueinander angeordneten Unterlegplatten (P1,P2,P101-P103') vorhanden ist,
**dadurch gekennzeichnet, dass**
die Schienen (S1,S2) zwei benachbart zueinander angeordnete Schienen sind, die in Draufsicht betrachtet zwischen sich einen spitzen Winkel einschließen, und **dass** die Überbrückungsplatte (104,104') zwischen einer Unterlegplatte (P1;P102,P102'), die der einen Schiene (S1,S2), und einer Unterlegplatte (P2;P103,P103'), die der anderen Schiene (S1,S2) zugeordnet ist, angeordnet ist.

2. Befestigungspunkt nach Anspruch 1, **dadurch gekennzeichnet, dass** die Führungsplatten (107,108,109) als Winkelführungsplatten ausgebildet sind, die an ihrer dem Untergrund (U) zugeordneten Unterseite jeweils einen von der Unterseite abstehenden Führungsabschnitt aufweisen, **dass** in der jeweils zugeordneten Unterlegplatte (P1,P2,P101-P103') eine Rille (11) ausgebildet ist, in der der Führungsabschnitt der jeweils zugeordneten Führungsplatte (107,108,109) bei fertig montiertem Befestigungspunkt (BP) formschlüssig sitzt, und
**dass** korrespondierend zum Führungsabschnitt der jeweils zugeordneten Führungsplatte (107,108,109) an der Unterseite (9) der jeweiligen Unterlegplatte (P1,P2,P101-P103') ebenfalls ein Führungsabsatz (10) ausgebildet ist, der bei fertig montiertem Befestigungspunkt (BP) formschlüssig in einer zugeordneten Einsenkung (116,117,118) des Untergrunds (U) sitzt.

3. Befestigungspunkt nach Anspruch 1 oder 2,
**dadurch gekennzeichnet, dass** der Untergrund (U) jeweils durch eine aus einem verfestigten Gusswerkstoff gebildete Schwelle oder Platte gebildet ist.

## Claims

1. Fastening point in which rails (S1,S2) provided for railways vehicles, said rails each comprising a rail foot (Sfl,Sf2), a rail web standing on the rail foot (Sfl,Sf2) and a rail head borne by the rail web are fastened, comprising:
- a firm base (U),
- two guide plates (107,108,109), which guide the respective assigned rails (S1,S2) to be fastened on one of its longitudinal sides,
and
two packing plates (P1,P2,P101-P103'), on each of which one of the guide plates (107,108,109) sits, wherein the packing plates (P1,P2,P101- P103') each extend under the rail foot (Sfl,Sf2) of the assigned rail (S1,S2),
wherein
a bridge plate (104,104') is arranged between the packing plates (P1,P2,P101-P103'), which bridge plate fills a distance found between the
front faces (3,4) assigned to one another of two packing plates (P1,P2,P101- P103') arranged adjacently to one another, **characterised in that** the rails (S1,S2) are two rails arranged adjacently to one another which, in plane view, enclose an acute angle between them, and **in that** the bridge plate (104,104') is arranged between a packing plate (P1;P102,P102') which is assigned to the one rail (S1,S2) and a packing plate (P2;P103,P103') which is assigned to the other rail (S1,S2).

2. Fastening point according to claim 1, **characterised in that** the guide plates (107,108,109) are formed as angled guide plates, the lower face of which that is assigned to the base (U) has a guide section that protrudes from the lower face, and **in that** a groove (11) is formed in the packing plate (P1,P2,P101-P103') assigned in each case, in which groove the guide section of the respective assigned guide plate (107,108,109) sits in a positive-locking manner when the fastening point (BP) is fully assembled, and **in that**, corresponding to the guide section of the respective assigned guide plate (107,108,109), a guide section (10) is also formed on the lower face (9) of the respective packing plate (P1,P2,P101-P103¹), which guide section sits in a positive-locking manner in an assigned groove (116,117,118) of the base (U) when the fastening point (BP) is fully assembled.

3. Fastening point according to either claim 1 or 2, **characterised in that** the base (U) in each case is formed by a sleeper or plate formed from a rigid cast material.

## Revendications

1. Point de fixation auquel sont fixés des rails (S1, S2) prévus pour des véhicules ferroviaires, chaque rail présentant un patin de rail (Sf1, Sf2), une âme de rail dressée sur le patin de rail (Sf1, Sf2) et une tête de rail portée par l'âme de rail, comportant :
- une base fixe (U),
- deux plaques de guidage (107, 108, 109) qui guident les rails (S1, S2) à fixer respectivement associés sur un de leurs côtés longitudinaux,
et
- deux plaques de support (P1, P2, P101-P103') sur lesquelles repose respectivement une des plaques de guidage (107, 108, 109), les plaques de support (P1, P2, P101-P103') s'étendant respectivement au-dessous du patin de rail (Sf1, Sf2) du rail (S1, S2) associé,
une plaque de liaison (104, 104') étant disposée entre les plaques de support (P1, P2, P101-P103') afin de couvrir une distance présente entre les côtés frontaux (3, 4), associés l'un à l'autre, de deux plaques de support (P1, P2, P101 - P103') positionnées adjacentes l'une à l'autre,
**caractérisé en ce que** les rails (S1, S2) sont deux rails disposés adjacents l'un à l'autre qui forment entre eux, selon une vue de dessus, un angle aigu, et **en ce que** la plaque de liaison (104, 104') est disposée entre une plaque de support (P1 ; P102, P102') associée à un rail (S1, S2) et une plaque de support (P2 ; P103, P103') associée à l'autre rail (S1, S2).

2. Point de fixation selon la revendication 1, **caractérisé en ce que** les plaques de guidage (107, 108, 109) sont conçues en tant que plaques de guidage angulaires qui présentent sur leur face inférieure associée à la base (U) respectivement une section de guidage saillante à partir de cette face inférieure, **en ce qu'**une rainure (11) est formée dans la plaque de support (P1, P2, P101-P103') respectivement associée, dans laquelle rainure repose par liaison de forme, à l'état d'assemblage fini du point de fixation (BP), la section de guidage de la plaque de guidage (107,108,109) respectivement associée, et **en ce que**, en correspondance à la section de guidage de la plaque de guidage (107,108,109) respectivement associée, un palier de guidage (10) est également formé sur la face inférieure (9) de la plaque de support (P1, P2, P101-P103') respective, lequel palier repose par liaison de forme, à l'état d'assemblage fini du point de fixation (BP), dans un enfoncement (116,117,118) associé de la base (U).

3. Point de fixation selon la revendication 1 ou 2, **caractérisé en ce que** la base (U) est formée respectivement par un seuil ou une plaque formé(e) d'un matériau de fonte solidifié.
